# EUROPEAN PATENT SPECIFICATION

(11) **EP 2 415 184 B1**
(45) Date of publication and mention of the grant of the patent: **10.04.2019**
(21) Application number: 10741823.8
(22) Date of filing: 12.02.2010
(51) Int. Cl.: H04B 7/155, H04B 7/15

(54) **REMOTE CONTROL FOR BOOSTER**
FERNSTEUERUNG FÜR EINEN BOOSTER
COMMANDE À DISTANCE D'UN PRÉAMPLIFICATEUR

(30) Priority: 13.02.2009 US 152637 P
(43) Date of publication of application: 08.02.2012
(73) Proprietor: Nextivity, Inc., San Diego, CA 92127 (US)
(72) Inventor: RIGATTI, Paul, San Diego, CA 92127 (US); LOTTER, Michiel, San Diego, CA 92127 (US); BOTHA, Louis, San Diego, CA 92127 (US); CONROY, Johan, San Diego, CA 92127 (US); MOHEBBI, Behzad, San Diego, CA 92127 (US)
(74) Representative: Elkington & Fife LLP
(86) International application number: PCT/US2010/024133
(87) International publication number: WO 2010/093949

(56) References cited:
- WO-A1-01/33743
- WO-A1-2008/143456
- WO-A2-2005/025078
- WO-A2-2006/099210
- KR-A- 20060 016 662
- KR-A- 20060 016 662
- KR-A- 20060 107 645
- KR-A- 20060 107 645
- US-B1- 7 054 641
- "3rd Generation Partnership Project; Technical Specification Group Services and System Aspects; Service accessibility (Release 6)", 3GPP STANDARD; 3GPP TS 22.011, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V6.4.0, 1 June 2004 (2004-06-01), pages 1-16, XP050360376,

## Description

### BACKGROUND

Existing cellular networks, such as (Global System for Mobile Communications (GSM) and IS95, are intended to enable contagious and continuous coverage to support the high terminal mobility expected from such systems. However, despite careful network design, indoor (in-building) coverage or the coverage of places with high shadowing attenuation (e.g. tunnels) of such networks is often "patchy", with "coverage holes" at best, and no coverage at worst. Impaired indoor coverage occurs because the cellular base stations are usually placed outside buildings, higher than the average building heights, to cover large areas. The signal may be adequate at "street-level", but is severely attenuated by the building materials, reducing the signal power in-building and resulting in the poor coverage. Loss of signal power (attenuation) depends on the building composition and can be tens of dBs for each wall penetration. The problem is exacerbated in the 3^{rd} generation systems such as Wideband Code Division Multiple Access (WCDMA) and cdma2000 that have high data transmission capability, which results in lower information bit energy (E_{b}), and much reduced link budget and cell foot-print. Currently, common solutions enabling indoor coverage include (1) adding more outdoor base stations in the same geographical area thus supporting smaller cell sizes, (2) microcells, (3) picocells (in-building cells), and (4) conventional repeaters for usage in boosting signal over a selected geographical area.

Other than the conventional repeater, the various solutions are expensive, involve extensive investment in the cellular network infrastructure, and are complex in planning and operation.

The conventional repeater, although less expensive than a base station, has several drawbacks. Outdoor repeaters remain too expensive for a private user, and involve careful planning. Many repeaters use large directional antennas or support additional backhaul frequencies to reduce antenna gain specifications, which results in lower spectral efficiency and capacity limitations. Conventional repeaters tend to transmit the maximum allowed transmit power and often cause increased interference in the network and accordingly may be unsuitable for network operators. Indoor repeaters are less expensive than outdoor repeater versions, but typically involve installation of high directional antennas on the roof, and ensured antenna isolation, creating costly demand for skilled installation and operation. Therefore, the system generally remains too complicated for an unskilled user and not sufficiently inexpensive for usage in a much localized coverage area.

### SUMMARY

The invention is defined by the claims.

Embodiments of a communication apparatus comprise a communication interface configured to be controlled remotely after deployment at a subscriber site via control information received through a base station.

### BRIEF DESCRIPTION OF THE DRAWINGS

Embodiments of the invention relating to both structure and method of operation may best be understood by referring to the following description and accompanying drawings:
**FIGURE 1** is a schematic block diagram depicting an example embodiment of a smart repeater in the form of a three-hop cellular repeater (Cel-Fi);
**FIGURE 2** is a schematic block and pictorial diagram illustrating operation of a communication system for remotely signaling an implied command to a repeater or Cel-Fi using a "Mobile Access Class" method;
**FIGURE 3** is a schematic block and pictorial diagrams showing example operations of a communication system for remotely signaling an implied command to a repeater or Cel-Fi using a dedicated downlink channel method;
**FIGURE 4** is a schematic block and pictorial diagram showing example operations of a communication system for remotely signaling an implied command to a repeater or Cel-Fi using a broadcast downlink channel methods;
**FIGURE 5** is a schematic block and pictorial diagram depicting operation of a communication system for remotely signaling an implied command to a repeater or Cel-Fi using an auxiliary signal method; and
**FIGURE 6** is a table showing radar test signals defined in European Telecommunications Standards Institute (ETSI) EN 301 893 V.1.5.1 (2008-08) which can be used in an embodiment of an auxiliary signal method.

### DETAILED DESCRIPTION

The cellular industry continuously attempts to improve the indoor coverage of 3G and 4G systems to meet the rising customer expectation for better voice services and high data-rate service requirements. Thus, many solutions such as Femtocells, 3G-router, and smart repeaters have been developed to address indoor coverage improvements. One such device is a three-hop cellular booster (referred to hereinafter as "Cel-Fi") which is described in detail in patent applications no. WO2005025078 by Mohebbi, filed on 3^{rd} of September 2003 and WO2005069249 by Mohebbi filed on 12 of January 2004. The Cel-Fi is an example of "smart repeater" for usage in a Wideband Code Division Multiple Access (WCDMA) system. However, the ideas and embodiments described herein are not limited to the described 3-hop repeater (Cel-Fi), and thus can be used for any indoor device including a booster, repeater, a router, a Femtocell, and the like. Neither is the disclosure limited to WCDMA system, and with appropriate modifications, can be applied to any type of cellular or wireless system, for example Long Term Evolution (LTE), Global System for Mobile Communications (GSM), and cdma2000 or wireless system such as WIFI and Worldwide Interoperability for Microwave Access (WiMax).

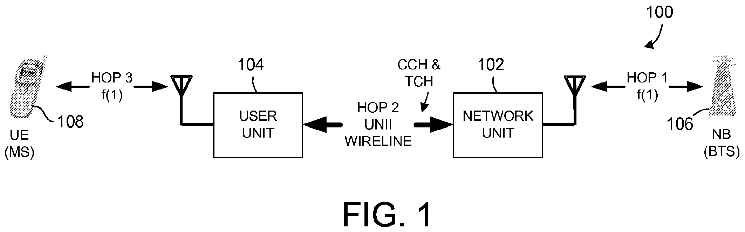

Referring to **FIGURE 1****,** an example of a smart repeater **100** is shown. The illustrative smart repeater **100** can be a Cel-Fi, a 3-hop repeater with a middle hop (hop 2) operating in wireless mode in UNII band. In other examples, the middle hop (hop 2) can be over a wire-line such as CAT5, electricity or telephone lines. The middle hop (hop 2) is an "autonomous" hop in that the waveform, bandwidth, and the signaling content is somewhat different from hop 1 that exists between Network unit **102** and Base Transceiver Station (BTS) **106,** and hop 3 that exists between User unit **104** and the Mobile Station (MS) **108.** The difference in signal characteristics can be due to modulation and/or the control channels that exist between the Network unit **102** and the User unit **104.** The waveform and bandwidth are changed to modulate the original signal such that the fading in the middle hop (hop 2) can be mitigated by the use of broadband modulation techniques such as Orthogonal Frequency-Division Multiplexing (OFDM), so that the repeated signal is only subject to two fading hops (hops 1 and 3), or to enable transmission of the captured cellular waveform in a digital mode over wire-line and exchanging control messages. An additional hop that imposes yet another fading pattern (Rayleigh or Rician) on the original signal can degrade the end signal considerably and push the required fading margins on all three hops sufficiently high, to render the repeater ineffective. The middle hop contains a bi-directional link including at least two channels, the "Control" (CCH) and "Traffic" (TCH) channels. The middle hop (hop 2), if wireless, can operate well in the UNII band (also known as "5 GHz high performance RLAN band"), and is capable of radar detection to meet the Dynamic Frequency Selection (DFS) requirements of the band. The repeater (Cel-Fi) **100** is capable of receiving, demodulating, and decoding a number of WCDMA system broadcast channels such Common Pilot Channel (CPICH) and P-CCPCH. The repeater **100** is also capable of decoding of Master Information Block (MIP) and System Information Block (SIB) frames. Repeater (Cel-Fi) **100** is also capable of receiving and repeating a single or multiple 5MHz WCDMA channels, has a simple WCDMA receiver with only receive capability, and can decode messages on a fixed dedicated or broadcast channel, without any mobility or protocol stack functionality.

Smart repeaters **100** such as Cel-Fi, if to be considered for mass deployment within 3G networks, once deployed within the subscriber premises are desired to be controlled remotely. Currently available repeaters that are approved for usage are deployed and operated by operators, with operator requiring full access to the repeater, a condition that is cannot be attained and is expensive with mass deployed residential and Small Office / Home Office (SOHO) repeaters and boosters such as Cel-Fi. As such, a number of novel systems for controlling repeaters and/or boosters remotely are discussed herein. The example disclosed herein to describe the systems is based on remotely enabling Cel-Fi(s) (switching "ON") and/or disabling Cel-Fi(s) (switching "OFF"). In other example applications and/or functionality, the remote control techniques and apparatus disclosed herein can also be used for other purposes such "channel selection", "power control" and other functionalities of repeaters, boosters, and Cel-Fis.

WCDMA (or any cellular system), supports several broadcast channels, such as the "pilot" channel (Common Pilot Channel - CPICH) and "Paging" channel (PICH), "Primary Common Control" channel (P-CCPCH), and the like, that are transmitted from a base station (NB). The channels sometimes work together and sometimes in isolation to supply system information used by mobile stations (UE) to acquire a network, and register and setup a communications session with the network. Information can be configured for delivery to the UEs in more than one way, with the configuration set based on operator preferences. In general any change in the presentation format can be used to remotely signal an implied command to a repeater or Cel-Fi that is capable of detecting the format change. Format changes may or may not have any impact on the network performance. Specific channels can be configured for sending massages to the repeaters and Cel-Fis via various common and dedicated control and traffic channels. The messages can be directed to all repeaters or a group of repeaters, or can be sent for a single repeater in the cell. "Auxiliary" signals or waveforms can also be used (transmitted from base station (NB) or a stand-alone transmitter) to remotely control a group or a single repeater or booster. Several specific examples of each of the methods mentioned above are described hereinafter.

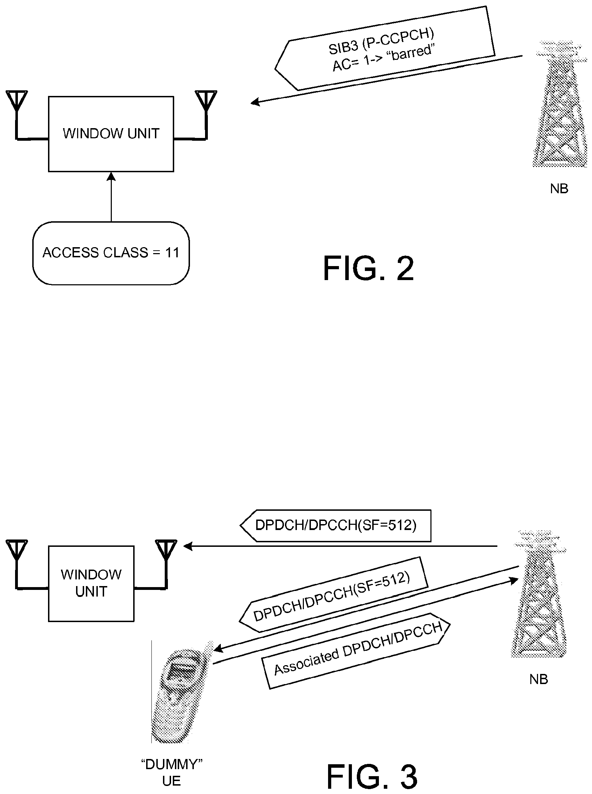

Referring to **FIGURE 2****,** a schematic block and pictorial diagram illustrates operation of a communication system for remotely signaling an implied command to a repeater or Cel-Fi using a "Mobile Access Class" method. For example, a repeater or Cel-Fi can be switched "OFF" by barring access class AC#11. Only one repeater unit and one base station are shown for simplification of discussion. The method is operational for any number of repeater units and base stations.

As described in 3GPP (3^{rd} Generation Partnership Project) TS 22.011 V6.4.0, "Service accessibility", under certain circumstances, a desirable functionality is prevention of UE users from making access attempts (including emergency call attempts) or responding to pages in specified areas of a Private Land Mobile Network (PLMN). Such situations may arise during states of emergency, or in a condition that one of two or more co-located PLMNs has failed. Broadcast messages should be available on a cell by cell basis indicating the class(es) of subscribers barred from network access. The functionality enables a network operator to prevent overload of the access channel under critical conditions. Access control is not intended to be used under normal operating conditions. All UEs are members of one of ten randomly allocated mobile populations, defined as Access Classes (AC) 0 to 9. The population number is stored in the Subscriber Identity Module/ Universal SIM (SIM/USIM). In addition, mobiles may be members of one or more out of five special categories (Access Classes 11 to 15), also held in the SIM/USIM, which are allocated to specific high priority users as follows. The enumeration is not meant as a priority sequence wherein Class 15 is assigned to PLMN staff, Class 14 to Emergency Services, Class 13 to Public Utilities such as water and gas suppliers, Class 12 to Security Services, and Class 11 for PLMN use.

If the mobile station (UE) is a member of at least one Access Class which corresponds to the permitted classes signaled over the air interface and the Access Class is applicable in the serving network, then access attempts are allowed. Otherwise access attempts are not allowed. Access Classes are assigned wherein Classes 0-9 are allocated to Home and Visited PLMNs, Classes 11 and 15 are allocated to Home PLMN alone, and Classes 12, 13, and 14 are allocated to Home PLMN and visited PLMNs of home country only.

Any number of classes may be barred at any one time. An additional control bit known as "Access Class 10" is also signaled over the air interface to the mobile station and indicates whether or not network access for emergency calls is allowed for mobile stations with access classes 0 to 9 or without an International Mobile Subscriber Identity (IMSI). For mobile stations with access classes 11 to 15, emergency calls are disallowed if both "Access class 10" and the relevant Access Class (11 to 15) are barred. Otherwise, emergency calls are allowed.

Accordingly, an access class (for example, AC #11, which is reserved for PLMN use only) can be assigned to Cel-Fi that is capable of reading the System Information Block 3 (SIB3), and transmitted on P-CCPCH in WCDMA (or UMTS) networks as shown in **FIGURE 2****.** If desirable to disable (turn "OFF") a group of Cel-Fis in a cell, the access class allocated to the Cel-Fis (AC #11 in **FIGURE 2**) is simply "barred" from accessing the network. As the Cel-Fi in the cell intercepts the broadcast messages before and during operation, on the detection of the "barred" message for AC #11, operation ceases until the "barred" message is removed.

In another configuration, the control message can be signaled to Cel-Fi by a change in the mapping of the "access classes" to "Access Service Classes" (ASC), used for Physical Random Access Channel (PRACH) channel priority detection, which is described in more detail in 3GPP TS 25.331, V6.4.0, "Radio Resource Control (RRC), Protocol Specification". The PRACH resources (i.e. access slots and preamble signatures for Frequency Division Duplexing (FDD)), may be divided between different "Access Service Classes" to enable different priorities of Random Access Channel (RACH) usage. Access Classes are only applied at initial access, and a mapping between Access Class (AC) and Access Service Class (ASC), indicated by System Information Block type 5 (SIB5) or System Information Block type 5bis, is used to assign AC to different ASCs.

Thus, a "disable" (OFF) command (for example) can be signaled to Cel-Fi (and repeaters that can decode SIB5 and read the AC to ASC mapping table), by changing AC to ACS mapping arrangement. The change should be made such that no substantial negative performance impact is experienced by the network. For example, one mapping configuration can be used to signal "enable" (ON) command and one can be used for "disable" (OFF) command.

Referring to **FIGURE 3****,** a schematic block and pictorial diagram shows operation of a communication system for remotely signaling an implied command to a repeater or Cel-Fi using a dedicated downlink channel method. For example, remote control messages can be broadcast by means of dedicated channels and a "dummy" mobile station (user equipment, UE).

A full WCDMA modem can be embedded into any repeater (including Cel-Fi), and a dedicated traffic channel (DPDCH/DPCCH) can be used as the repeater control channel, with inclusion of appropriate software on both the WCDMA network and the repeater sides. In such arrangement, dedicated commands can be issued to a single repeater or otherwise to a group of repeaters and Cel-Fis. However, the illustrative technique may be excessively expensive since a full modem and protocol stack functionalities are used in each repeater. A less expensive configuration uses a simple receiver at the repeater, similar to the Cel-Fi receiver with only receive capability, and decodes messages on a fixed dedicated or broadcast channel, without any mobility or protocol stack functionality. Since the dedicated channel is part of system overhead, reduction of the transmit power allocated to the channel to a minimum is desirable. A low-data rate and hence low interference channel exists on the downlink of WCDMA systems with a spreading factor of 512 (SF =512), providing a data rate of about 3 kbs/s. As the data rate and spreading factor of the dedicated channel is fixed, the channel may possibly be used in a broadcast mode, without an uplink channel pair. If a bi-directional link is required for the channel (DPDCH/DPCCH), a single "dummy UE" can be used to initiate and keep the link up in a cell, allowing interception of the signal messages by smart repeaters (Cel-Fis) in the cell. The "dummy UE" transceiver (or SW) is modified such that the maximum downlink transmit power for that channel is requested from the base station (NB), such that the transmissions covers the entire cell foot-print. The channel encryption option can be switched off, so that Cel-Fis can decode the message.

The task of the "dummy UE" is to initiate a call and maintain the call until all Cel-Fis have received, decoded and executed the control message. The channel can otherwise be configured to appear on a secondary scrambling code, even though more interference on the downlink results. If the orthogonal variable spreading factor (OVSF) code is predefined, then the acquisition time of the channel by Cel-Fis can be reduced appreciably, reducing transmission time from the cell base station (NB).

In other sample operations, the "dummy UE" can setup a point-to-multipoint Multimedia Broadcast Mobile services (MBMS) channel at a set data rate (i.e. a fixed spreading factor (SF)), where the Cel-Fi control messages are broadcast over the entire cell. Because a point-to-multipoint MBMS channel does not support encryption, the messages can be intercepted by all Cel-Fis operational in the broadcasting cell. The Cel-Fis are modified to acquire the capability of decoding point-to-multipoint MBMS broadcast channel.

The dedicated channel arrangement need not be active all the time. The dedicated channels can be set up as a change in the Cel-Fi status is warranted. In such a case, an application is used to convey the control messages such as "ON" or "OFF" to a group or a single Cel-Fi. Cel-Fi can be designed such that once the message is received, the state is stored on the device flash memory so that after a device "re-boot" the last preserved control message is executed again.

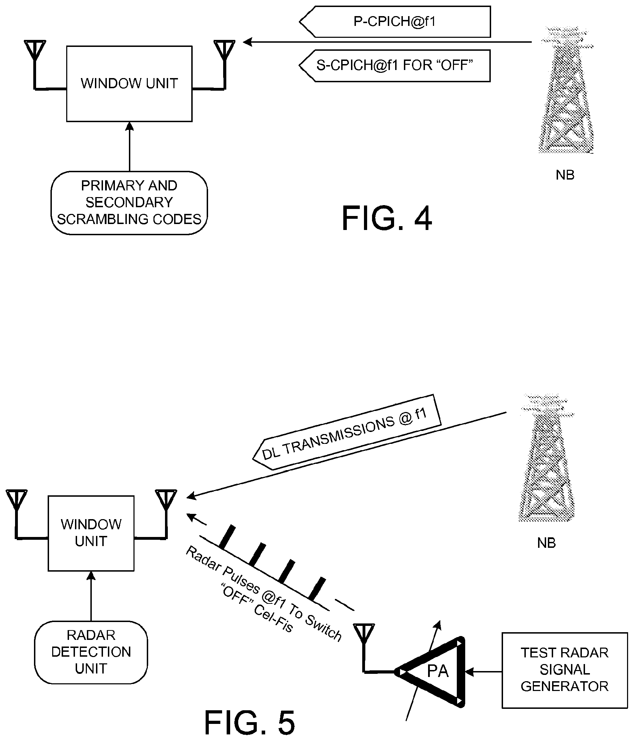

Referring to **FIGURE 4****,** a schematic block and pictorial diagram shows another operation of a communication system for remotely signaling an implied command to a repeater or Cel-Fi using a broadcast downlink channel method. For example, Secondary Common Pilot Channel (S-CPICH) transmission can be used to switch "OFF" the repeater (Cel-Fi). In the example, only a single repeater unit and base station is depicted for simplicity in illustration. In application, any suitable number of repeater units and base stations can operate concurrently.

In another example functionality, detection of the presence of a secondary scrambling code transmitted from the same base station (NB) in the cell alone, without any higher layer messages, can be used to enable (switch "ON") or disable (switch "OFF") the deployed Cel-Fis in a given cell. For example, one pre-defined secondary scrambling code may signal the "disable" command, while another pre-defined secondary scrambling code can signal the "enable" command. As before, the secondary scrambling codes can be transmitted when used to change the state of the deployed Cel-Fis. The secondary scrambling code(s) can be transmitted as the pilot channel (S-CPICH) without any other associated channels, for example as shown in **FIGURE 4** with primary and secondary Common Pilot Channel (CPICH) on channel f1.

The secondary pilot (S-CPICH) signal can be generated by the base station (NB) or externally and injected into the existing base station antennas, or transmitted through a separate RF path and antennas, either co-located with base station antennas, or in a separate fixed or mobile location. The secondary pilot (S-CPICH) can be transmitted on one or all Cel-Fi operating WCDMA channels (f1 in **FIGURE 4**) at a power sufficiently high to ensure all Cel-Fis receive the signal with adequate signal quality. In other example functionality, the transmit power can be selected such that a subset of Cel-Fis in a cell detect the control signal. Directional or adaptive antennas can also be used to target Cel-Fis in a desired geographical area within a cell for remote control.

The smart repeater (Cel-Fi) can be designed such that once the message is received, the state is stored on flash memory so that after a device "re-boot", the control message is preserved and is executed again.

Referring to **FIGURE 5****,** a schematic block and pictorial diagram illustrates operation of a communication system for remotely signaling an implied command to a repeater or Cel-Fi using an auxiliary signal method. For example, radar test signal (auxiliary signal) transmissions can be used to switch "OFF") a smart repeater. In the illustrative example, only a single repeater unit and base station are shown. In operation any suitable number of repeater units and base stations can be operative.

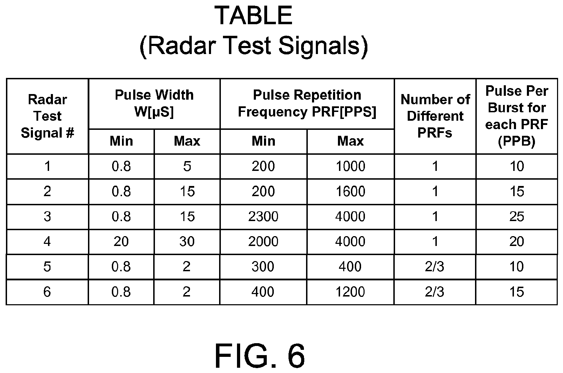

Additional or Auxiliary (additional to the defined network signals) signaling can be used to remotely control Cel-Fis. For example, the interference resilience property of Spread Spectrum modulation of WCDMA systems can be used to keep the detrimental effects of such additional signaling to a minimum. Therefore, waveforms that interfere least with the network should be considered for the signaling task. For example, "Radar test signals" defined in European Telecommunications Standards Institute (ETSI) EN 301 893 V.1.5.1 (2008-08) can be considered for the low-interfering auxiliary waveforms (see Table 1 of **FIGURE 6** for examples), for transmission in the cellular band. For example, test signal #1 can be used to disable (OFF), while test signal #3 can be used to enable (ON) Cel-Fis remotely. The test signals can be transmitted in one or all of the Cel-Fi cellular operating bands, at a power sufficiently high to ensure all Cel-Fis receive the signal with adequate signal quality (Fig.5). In another operative configuration, the transmit power can be selected such that a subset of Cel-Fis in a cell detect the control signal. Directional or adaptive antennas can also be used to target Cel-Fis in a desired geographical area within a cell for remote control.

The auxiliary signal can be injected into the existing base station antennas, or transmitted through a separate RF path and antennas, either co-located with base station antennas, or in a separate fixed or mobile location. The repeater or Cel-Fi, to detect the radar pulses, uses the appropriate radar detection algorithms along with the hardware and software that are used for radar detection, for example similar to the algorithms used in UNII band for Dynamic Frequency Selection (DFS) (UNII or 5GHz performance RLAN bands). The algorithm can be as uncomplicated as a simple correlator, which correlates the received signal with the selected radar test signals. Detection of a given radar test signal is an indication of the control message to enable or disable Cel-Fis accordingly.

The repeater or Cel-Fi can be designed such that once the message is received, the state is stored on flash memory so that after a device "re-boot" the control message is preserved and is executed again.

In a further example technique, Auxiliary PN (APN) sequences, transmitted below the NB signal level, can be used as the signal for remotely controlling Cel-Fis. As the transmission of the auxiliary PN signal can be synchronized and frequency locked to the NB carrier frequency, long integration periods of the received signal with reference sequence can be used to detect the APN at very low power levels. The long integration time can facilitate low transmission power of the APN. For the APNs, unused WCDMA scrambling codes can be used. One APN can be designated to switch Cel-Fis "ON", while another can be designated to switch them "OFF".

The APN signals can be transmitted in all Cel-Fi operating cellular bands (or in selected one or more bands) at a power sufficiently high to ensure all Cel-Fis receive the signal with adequate signal quality. In other implementations, the transmit power can be selected such that a subset of Cel-Fis in a cell detect the control signal. Directional or adaptive antennas can also be used to target Cel-Fis in a desired geographical area within a cell for remote control.

The APN signal can be injected into the existing base station (NB) antennas, or transmitted through a separate RF path and antennas, either co-located with NB antennas, or in a separate fixed or mobile location. The Cel-Fis, to detect the APN codes, use the appropriate APN detection algorithms which are similar to despreading of DS spread spectrum signals. Algorithms can be as simple as correlation of the received signal with the reference APN code at the receiver. The detection of a given APN signal is an indication of the control signal to enable or disable the Cel-Fis as directed.

Cel-Fi can be designed such that once the message is received, the state is stored on flash memory so that after a device "re-boot" the control message preserved and is executed again.

Terms "substantially", "essentially", or "approximately", may be used herein, and relate to an industry-accepted tolerance to the corresponding term. Such an industry-accepted tolerance ranges from less than one percent to twenty percent and corresponds to, but is not limited to, functionality, values, process variations, sizes, operating speeds, and the like. The term "coupled", as may be used herein, includes direct coupling and indirect coupling via another component, element, circuit, or module where, for indirect coupling, the intervening component, element, circuit, or module does not modify the information of a signal but may adjust its current level, voltage level, and/or power level. Inferred coupling, for example where one element is coupled to another element by inference, includes direct and indirect coupling between two elements in the same manner as "coupled".

The illustrative block diagrams and flow charts depict process steps or blocks in a manufacturing process. Although the particular examples illustrate specific process steps or acts, many alternative implementations are possible and commonly made by simple design choice. Acts and steps may be executed in different order from the specific description herein, based on considerations of function, purpose, conformance to standard, legacy structure, and the like.

While the present disclosure describes various embodiments, these embodiments are to be understood as illustrative and do not limit the claim scope. Many variations, modifications, additions and improvements of the described embodiments are possible. For example, those having ordinary skill in the art will readily implement the steps necessary to provide the structures and methods disclosed herein, and will understand that the process parameters, materials, and dimensions are given by way of example only. The parameters, materials, and dimensions can be varied to achieve the desired structure as well as modifications, which are within the scope of the claims. Variations and modifications of the embodiments disclosed herein may also be made while remaining within the scope of the following claims.

## Claims

1. A communication apparatus (100) comprising:
a communication interface (102, 104) configured to be controlled remotely after deployment at a subscriber site via control information received through a base station (106), wherein
the communication interface comprises a three-hop repeater or signal booster with a middle hop (HOP 2) that contains a digital bi-directional link including at least two channels, namely a control channel (CCH) and a traffic channel (TCH);
the communication interface is configured for control comprising enablement ("ON"), disablement ("OFF"), channel selection, and power control;
and the control information comprises an implied command conveyed as a change in format to one of several broadcast channels (CPICH, PICH; P-CCPCH).

2. The apparatus according to Claim 1, wherein the communication interface is configured to receive broadcast messages via a plurality of broadcast channels from the base station, wherein the plurality of broadcast channels can selectively operate in combination or in isolation to supply information for mobile stations (108) to acquire a network, register, and set up a communications session with the network.

3. The apparatus according to Claim 1, wherein the communication interface is configured to disable ("OFF") a group of repeaters or boosters in a cell, wherein an access class allocated to the repeaters or boosters in the cell bars network access, and wherein the implied command is a change in the barring of access classes, such that the repeaters and boosters in the cell intercept broadcast messages before and during operation, and cease operation upon detection of a barred message until the barred message is removed.

4. The apparatus according to Claim 1, wherein the communication interface is configured to selectively enable ("ON") and disable ("OFF") a group of repeaters or boosters in a cell, wherein the implied command is a change in the mapping of access classes, wherein access is changed from access class (AC) to access service class (ASC) as determined by a predetermined mapping configuration.

5. The apparatus according to Claim 1, wherein the communication interface is configured to control a repeater control channel using a dedicated traffic channel wherein dedicated commands are issued to at least one repeater and/or booster and a single "dummy" mobile station ("DUMMY" UE) is used to initiate and maintain a link in a cell until all repeaters and/or boosters in the cell have received, decoded and executed the control message, enabling interception of the implied command in signal messages by repeaters and/or boosters in the cell,
wherein the single "dummy" mobile station is a piece of user equipment.

6. The apparatus according to Claim 1, wherein the communication interface is configured to control a repeater control channel using a dedicated traffic channel wherein dedicated commands are issued to at least one repeater and/or booster and a single "dummy" mobile station ("DUMMY" UE) is used to set up a point-to-multipoint Multimedia Broadcast Mobile Services (MBMS) channel at a selected data rate and fixed spreading factor, repeater control messages including the implied command being broadcast over an entire cell,
wherein the single "dummy" mobile station is a piece of user equipment.

7. The apparatus according to Claim 1, wherein the communication interface is configured to control a repeater control channel using a broadcast downlink channel wherein detection of presence of a secondary scrambling code transmitted from a same base station in a cell is used as the implied command to enable ("ON") and disable ("OFF") deployed repeaters and/or boosters in the cell.

8. The apparatus according to Claim 1, wherein the communication interface is configured to remotely control a repeater control channel using auxiliary signalling that is injected into base station antennas or transmitted through a separate radio frequency path and antennas.

9. A communication method comprising:
controlling a communication interface remotely after deployment at a subscriber site; receiving control information through a base station; and
controlling the communication interface using the received control information wherein, the communication interface comprises a three-hop repeater or signal booster with a middle hop that contains a digital bi-directional link including at least two channels, a control channel (CCH) and a traffic channel (TCH);
wherein the control information comprises an implied command conveyed as a change in format to one of several broadcast channels (CPICH, PICH; P-CCPCH).

10. The method according to Claim 9 further comprising:
configuring the communication interface for control comprising enablement ("ON"), disablement ("OFF"), channel selection, and power control;
receiving broadcast messages at the communication interface via a plurality of broadcast channels from the base station; and
selectively operating the plurality of broadcast channels in combination or in isolation to supply information for mobile stations to acquire a network, register, and set up a communications session with the network.

11. The method according to Claim 9 further comprising:
disabling ("OFF") a group of repeaters or boosters in a cell comprising:
barring network access using an access class allocated to the repeaters or boosters in the cell;
intercepting broadcast messages in the repeaters and boosters in the cell before and during operation; and
ceasing operation upon detection of a barred message until the barred message is removed;
wherein the implied command is the change in the barring of access classes.

12. The method according to Claim 9, further comprising:
selectively enabling ("ON") and disabling ("OFF") a group of repeaters or boosters in a cell, wherein access is changed from access class (AC) to access service class (ASC) as determined by a predetermined mapping configuration, wherein the implied command is the change in the mapping of access classes.

13. The method according to Claim 9, further comprising:
remotely controlling a repeater control channel using a technique selected from a group consisting of:
(1) remotely controlling a repeater control channel using a dedicated traffic channel;
issuing dedicated commands to at least one repeater and/or booster;
using a single "dummy" mobile station to initiate and maintain a link in a cell until all repeaters and/or boosters in the cell have received, decoded, and executed the control message; and
enabling interception of signal messages by repeaters and/or boosters in the cell;
(2) remotely controlling a repeater control channel using a dedicated traffic channel;
issuing dedicated commands to at least one repeater and/or booster; using a single "dummy" mobile station to set up a point-to-multipoint Multimedia Broadcast Mobile Services (MBMS) channel at a selected data rate and fixed spreading factor; and
broadcasting repeater control messages over an entire cell;
(3) remotely controlling a repeater control channel using a broadcast downlink channel; and
using detection of presence of a secondary scrambling code transmitted from a same base station in a cell to enable (switch "ON") and disable (switch "OFF") deployed repeaters and/or boosters in the cell; and
(4) remotely controlling a repeater control channel using auxiliary signalling that is injected into base station antennas or transmitted through a separate radio frequency path and antennas;
wherein the single "dummy" mobile station is a piece of user equipment.

14. A communication system comprising:
a cellular network; and
a communication apparatus of any one of claims 1 to 8 coupled to the cellular network.

## Patentansprüche

1. Kommunikationsvorrichtung (100), umfassend:
eine Kommunikationsschnittstelle (102, 104), die konfiguriert ist, um nach dem Einsatz an einem Teilnehmerstandort durch Steuerinformationen, die über eine Basisstation (106) empfangen werden, ferngesteuert zu werden, wobei
die Kommunikationsschnittstelle einen Repeater mit drei Stationen oder einen Signalbooster mit einer mittleren Station (HOP 2) umfasst, die eine digitale bidirektionale Strecke mit mindestens zwei Kanälen enthält, und zwar einen Steuerkanal (CCH) und einen Traffic-Kanal (TCH);
wobei die Kommunikationsschnittstelle zur Steuerung, umfassend Aktivierung ("ON"), Deaktivierung ("OFF"), Kanalauswahl und Energiesteuerung, konfiguriert ist;
und die Steuerinformationen einen impliziten Befehl umfassen, der als eine Formatänderung an einen von mehreren Rundsendekanälen (CPICH, PICH; P-CCPCH) übermittelt wird.

2. Vorrichtung nach Anspruch 1, wobei die Kommunikationsschnittstelle konfiguriert ist, um über eine Vielzahl von Rundsendekanälen rundgesendete Mitteilungen von der Basisstation zu empfangen, wobei die Vielzahl von Rundsendekanälen selektiv kombiniert oder isoliert betrieben werden können, um Informationen für Mobilstationen (108) zum Erwerben eines Netzwerks, Registrieren und Aufbauen einer Kommunikationssitzung mit dem Netzwerk zuzuführen.

3. Vorrichtung nach Anspruch 1, wobei die Kommunikationsschnittstelle konfiguriert ist, um eine Gruppe von Repeatern oder Boostern in einer Zelle zu deaktivieren ("OFF"), wobei eine den Repeatern oder Boostern in der Zelle zugeordnete Zugriffsklasse den Netzwerkzugriff sperrt und wobei der implizite Befehl eine Änderung der Sperrung von Zugriffsklassen ist, so dass die Repeater und Booster in der Zelle rundgesendete Mitteilungen vor und während des Betriebs abfangen und den Betrieb nach Detektion einer gesperrten Mitteilung einstellen, bis die gesperrte Mitteilung entfernt ist.

4. Vorrichtung nach Anspruch 1, wobei die Kommunikationsschnittstelle konfiguriert ist, um eine Gruppe von Repeatern oder Boostern in einer Zelle selektiv zu aktivieren ("ON") und zu deaktivieren ("OFF"), wobei der implizite Befehl eine Änderung in der Abbildung von Zugriffsklassen ist, wobei Zugriff von einer Zugriffsklasse (AC) auf eine Zugriffsdienstklasse (ASC) geändert wird, wie durch eine vorbestimmte Abbildungskonfiguration bestimmt.

5. Vorrichtung nach Anspruch 1, wobei die Kommunikationsschnittstelle konfiguriert ist, um einen Repeater-Steuerkanal mithilfe eines fest zugewiesenen Traffic-Kanals zu steuern, wobei fest zugewiesene Befehle an mindestens einen Repeater und/oder Booster ausgegeben werden und eine einzelne "Dummy"-Mobilstation ("DUMMY"-UE) verwendet wird, um eine Strecke in einer Zelle zu initiieren und aufrechtzuerhalten, bis alle Repeater und/oder Booster in der Zelle die Steuermitteilung empfangen, decodiert und ausgeführt haben, wodurch das Abfangen des implizierten Befehls in Signalmitteilungen durch Repeater und/oder Booster in der Zelle ermöglicht wird,
wobei die einzelne "Dummy"-Mobilstation ein Teil einer Nutzeranlage ist.

6. Vorrichtung nach Anspruch 1, wobei die Kommunikationsschnittstelle konfiguriert ist, um einen Repeater-Steuerkanal mithilfe eines fest zugewiesenen Traffic-Kanals zu steuern, wobei fest zugewiesene Befehle an mindestens einen Repeater und/oder Booster ausgegeben werden und eine einzelne "Dummy"-Mobilstation ("DUMMY"-UE) verwendet wird, um einen Punkt-zu-Mehrpunkt-MBMS-(Multimedia Broadcast Mobile Services)-Kanal mit einer ausgewählten Datenrate und einem festen Spreizungsfaktor aufzubauen, wobei die Repeater-Steuermitteilungen den über eine gesamte Zelle rundgesendeten impliziten Befehl enthalten,
wobei die einzelne "Dummy"-Mobilstation ein Teil einer Nutzeranlage ist.

7. Vorrichtung nach Anspruch 1, wobei die Kommunikationsschnittstelle konfiguriert ist, um einen Repeater-Steuerkanal mithilfe eines Rundsendeabwärtsstreckenkanals zu steuern, wobei die Detektion des Vorhandenseins eines sekundären Verwürfelungscodes, der von einer selben Basisstation in einer Zelle gesendet wird, als der implizite Befehl zum Aktivieren ("ON") und deaktivieren ("OFF") von in der Zelle eingesetzten Repeatern und/oder Boostern verwendet wird.

8. Vorrichtung nach Anspruch 1, wobei die Kommunikationsschnittstelle konfiguriert ist, um einen Repeater-Steuerkanal mithilfe von Hilfssignalgebung fernzusteuern, die in Basisstationsantennen injiziert oder über einen separaten Funkfrequenzweg und Antennen gesendet wird.

9. Kommunikationsverfahren, umfassend:
Fernsteuern einer Kommunikationsschnittstelle nach dem Einsatz an einem Teilnehmerstandort; Empfangen von Steuerinformationen über eine Basisstation; und
Steuern der Kommunikationsschnittstelle mithilfe der empfangenen Steuerinformationen, wobei die Kommunikationsschnittstelle einen Repeater mit drei Stationen oder einen Signalbooster mit einer mittleren Station umfasst, die eine digitale bidirektionale Strecke mit mindestens zwei Kanälen enthält, einen Steuerkanal (CCH) und einen Traffic-Kanal (TCH);
wobei die Steuerinformationen einen impliziten Befehl umfassen, der als eine Formatänderung an einen von mehreren Rundsendekanälen (CPICH, PICH; P-CCPCH) übermittelt wird.

10. Verfahren nach Anspruch 9, ferner umfassend:
Konfigurieren der Kommunikationsschnittstelle zur Steuerung, umfassend Aktivierung ("ON"), Deaktivierung ("OFF"), Kanalauswahl und Energiesteuerung;
Empfangen rundgesendeter Mitteilungen an der Kommunikationsschnittstelle über eine Vielzahl von Rundsendekanälen von der Basisstation; und
selektives Betreiben der Vielzahl von Rundsendekanälen kombiniert oder isoliert, um Informationen für Mobilstation zum Erwerben eines Netzwerks, Registrieren und Aufbauen einer Kommunikationssitzung mit dem Netzwerk zuzuführen.

11. Verfahren nach Anspruch 9, ferner umfassend:
Deaktivieren ("OFF") einer Gruppe von Repeatern oder Boostern in einer Zelle, umfassend:
Sperren von Netzwerkzugriff mithilfe einer den Repeatern oder Boostern in der Zelle zugeordneten Zugriffsklasse;
Abfangen rundgesendeter Mitteilungen in den Repeatern und Boostern in der Zelle vor und während des Betriebs; und
Einstellen des Betriebs bei Detektion einer gesperrten Mitteilung, bis die gesperrte Mitteilung entfernt ist;
wobei der implizite Befehl die Änderung des Sperrens von Zugriffsklassen ist.

12. Verfahren nach Anspruch 9, ferner umfassend:
selektives Aktivieren ("ON") und Deaktivieren ("OFF") einer Gruppe von Repeatern oder Boostern in einer Zelle, wobei der Zugriff von einer Zugriffsklasse (AC) auf eine Zugriffsdienstklasse (ASC) geändert wird, wie durch eine vorbestimmte Abbildungskonfiguration bestimmt, wobei der implizite Befehl die Änderung in der Abbildung von Zugriffsklassen ist.

13. Verfahren nach Anspruch 9, ferner umfassend:
Fernsteuern eines Repeater-Steuerkanals mithilfe einer Technik, ausgewählt aus einer Gruppe, bestehend aus:
(1) Fernsteuern eines Repeater-Steuerkanals mithilfe eines fest zugewiesenen Traffic-Kanals; Ausgeben fest zugewiesener Befehle an mindestens einen Repeater und/oder Booster;
Verwenden einer einzelnen "Dummy"-Mobilstation, um eine Strecke in einer Zelle zu initiieren und aufrechtzuerhalten, bis alle Repeater und/oder Booster in der Zelle die Steuermitteilung empfangen, decodiert und ausgeführt haben; und
Aktivieren des Abfangens von Signalmitteilungen durch Repeater und/oder Booster in der Zelle;
(2) Fernsteuern eines Repeater-Steuerkanals mithilfe eines fest zugewiesenen Traffic-Kanals; Ausgeben fest zugewiesener Befehle an mindestens einen Repeater und/oder Booster mithilfe einer einzelnen "Dummy"-Mobilstation, um einen Punkt-zu-Mehrpunkt-MBMS-(Multimedia Broadcast Mobile Services)-Kanal mit einer ausgewählten Datenrate und einem festen Spreizfaktor aufzubauen; und
Rundsenden von Repeater-Steuermitteilungen über eine gesamte Zelle;
(3) Fernsteuern eines Repeater-Steuerkanals mithilfe eines Rundsendeabwärtsstreckenkanals; und
Verwenden der Detektion des Vorhandenseins eines sekundären Verwürfelungscodes, der von einer selben Basisstation in einer Zelle gesendet wird, um in der Zelle eingesetzte Repeater und/oder Booster zu aktivieren ("ON"-schalten) und zu deaktivieren ("OFF"-schalten); und
(4) Fernsteuern eines Repeater-Steuerkanals mithilfe von Hilfssignalgebung, die in Basistationsantennen injiziert oder über einen separaten Funkfrequenzweg und Antennen gesendet wird;
wobei die einzelne "Dummy"-Mobilstation ein Teil einer Nutzeranlage ist.

14. Kommunikationssystem, umfassend:
ein zelluläres Netzwerk; und
eine Kommunikationsvorrichtung nach einem der Ansprüche 1 bis 8, die mit dem zellulären Netzwerk gekoppelt ist.

## Revendications

1. Appareil de communication (100) comprenant :
une interface de communication (102, 104) configurée pour être contrôlée à distance après le déploiement au niveau d'un site d'abonné via des informations de commande reçues par l'intermédiaire d'une station de base (106), dans lequel
l'interface de communication comprend un répéteur ou préamplificateur de signal à trois étages doté d'un étage intermédiaire (HOP 2) qui contient une liaison bidirectionnelle numérique comprenant au moins deux canaux, à savoir un canal de commande (CCH) et un canal de trafic (TCH) ;
l'interface de communication est configurée pour une commande comprenant une activation (« ON »), une désactivation (« OFF »), une sélection de canal et une commande de puissance ;
et les informations de commande comprennent une commande impliquée transmise sous la forme d'un changement de format à l'un de plusieurs canaux de diffusion (CPICH, PICH ; P-CCPCH).

2. Appareil selon la revendication 1, ladite interface de communication étant configurée pour recevoir des messages de diffusion via une pluralité de canaux de diffusion en provenance de la station de base, ladite pluralité de canaux de diffusion pouvant fonctionner de manière sélective en combinaison ou isolément pour fournir des informations pour que les stations mobiles (108) acquièrent un réseau, enregistrent, et établissent une session de communication avec le réseau.

3. Appareil selon la revendication 1, ladite interface de communication étant configurée pour désactiver (« OFF ») un groupe de répéteurs ou préamplificateurs dans une cellule, une classe d'accès attribuée aux répéteurs ou préamplificateurs dans la cellule interdisant un accès de réseau, et la commande impliquée étant une modification de l'interdiction de classes d'accès, de sorte que les répéteurs et préamplificateurs dans la cellule interceptent des messages de diffusion avant et pendant le fonctionnement, et interrompent le fonctionnement lors de la détection d'un message d'interdiction jusqu'à la suppression du message d'interdiction.

4. Appareil selon la revendication 1, ladite interface de communication étant configurée pour activer (« ON ») et désactiver (« OFF ») de manière sélective un groupe de répéteurs ou préamplificateurs dans une cellule, ladite commande impliquée étant une modification du mappage de classes d'accès, ledit accès passant d'une classe d'accès (AC) à une classe de service d'accès (ASC) telle que déterminée par une configuration de mappage prédéfinie.

5. Appareil selon la revendication 1, ladite interface de communication étant configurée pour commander un canal de commande de répéteur à l'aide d'un canal de trafic dédié dans lequel des commandes dédiées sont délivrées à au moins un répéteur et/ou préamplificateur et une seule station mobile « fictive » (UE « FICTIF ») est utilisée pour initier et maintenir une liaison dans une cellule jusqu'à ce que tous les répéteurs et/ou préamplificateurs dans la cellule aient reçus, décodés et exécutés le message de commande, permettant l'interception de la commande impliquée dans des messages de signal par des répéteurs et/ou préamplificateurs dans la cellule,
ladite seule station mobile « fictive » étant un élément d'équipement utilisateur.

6. Appareil selon la revendication 1, ladite interface de communication étant configurée pour commander un canal de commande de répéteur à l'aide d'un canal de trafic dédié dans lequel des commandes dédiées sont délivrées à au moins un répéteur et/ou préamplificateur et une seule station mobile « fictive » (UE « FICTIF ») est utilisée pour établir un canal de services mobiles de diffusion multimédia (MBMS) point à multipoint à un débit de données choisi et un facteur de diffusion fixe, des messages de commande de répéteur comprenant la commande impliquée en cours de diffusion sur une cellule entière,
ladite seule station mobile « fictive » étant un élément d'équipement utilisateur.

7. Appareil selon la revendication 1, ladite interface de communication étant configurée pour commander un canal de commande de répéteur à l'aide d'un canal de liaison descendante de diffusion dans lequel la détection de la présence d'un code de brouillage secondaire transmis à partir d'une même station de base dans une cellule est utilisée comme commande impliquée pour activer (« ON ») et désactiver (« OFF ») des répéteurs et/ou préamplificateurs déployés dans la cellule.

8. Appareil selon la revendication 1, ladite interface de communication étant configurée pour commander à distance un canal de commande de répéteur à l'aide d'une signalisation auxiliaire qui est injectée dans des antennes de station de base ou transmise par un chemin radiofréquence distinct et des antennes.

9. Procédé de communication comprenant :
la commande d'une interface de communication à distance après le déploiement au niveau d'un site d'abonné ; la réception d'informations de commande par l'intermédiaire d'une station de base ; et
la commande de l'interface de communication à l'aide des informations de commande reçues dans lequel, l'interface de communication comprend un répéteur ou préamplificateur de signal à trois étages doté d'un étage intermédiaire qui contient une liaison bidirectionnelle numérique comprenant au moins deux canaux, un canal de commande (CCH) et un canal de trafic (TCH) ;
lesdites informations de commande comprenant une commande impliquée transmise sous la forme d'un changement de format à l'un de plusieurs canaux de diffusion (CPICH, PICH ; P-CCPCH).

10. Procédé selon la revendication 9 comprenant en outre :
la configuration de l'interface de communication pour une commande comprenant l'activation (« ON »), la désactivation (« OFF »), une sélection de canal et une commande de puissance ;
la réception de messages de diffusion au niveau de l'interface de communication via une pluralité de canaux de diffusion en provenance de la station de base ; et
la mise en fonctionnement de manière sélective de la pluralité de canaux de diffusion en combinaison ou isolément pour fournir des informations pour que les stations mobiles acquièrent un réseau, enregistrent, et établissent une session de communication avec le réseau.

11. Procédé selon la revendication 9 comprenant en outre :
la désactivation (« OFF ») d'un groupe de répéteurs ou préamplificateurs dans une cellule comprenant :
l'interdiction à un réseau d'accès à l'aide d'une classe d'accès attribuée aux répéteurs ou préamplificateurs dans la cellule ;
l'interception de messages de diffusion dans les répéteurs et préamplificateurs dans la cellule avant et pendant le fonctionnement ; et
l'interruption du fonctionnement lors de la détection d'un message d'interdiction jusqu'à la suppression du message d'interdiction ;
ladite commande impliquée étant la modification de l'interdiction de classes d'accès.

12. Procédé selon la revendication 9, comprenant en outre :
l'activation (« ON ») et la désactivation (« OFF ») de manière sélective d'un groupe de répéteurs ou préamplificateurs dans une cellule, ledit accès passant d'une classe d'accès (AC) à une classe de service d'accès (ASC) telle que déterminée par une configuration de mappage prédéfinie, ladite commande impliquée étant la modification du mappage de classes d'accès.

13. Procédé selon la revendication 9, comprenant en outre :
la commande à distance d'un canal de commande de répéteur à l'aide d'une technique choisie dans le groupe constitué par :
(1) la commande à distance d'un canal de commande de répéteur à l'aide d'un canal de trafic dédié ;
la délivrance de commandes dédiées à au moins un répéteur et/ou préamplificateur ;
l'utilisation d'une seule station mobile « fictive » pour initier et maintenir une liaison dans une cellule jusqu'à ce que tous les répéteurs et/ou préamplificateurs dans la cellule aient reçus, décodés, et exécutés le message de commande ; et
l'activation de l'interception de messages de signal par des répéteurs et/ou préamplificateurs dans la cellule ;
(2) la commande à distance d'un canal de commande de répéteur à l'aide d'un canal de trafic dédié ;
la délivrance de commandes dédiées à au moins un répéteur et/ou préamplificateur ; l'utilisation d'une seule station mobile « fictive » pour établir un canal de services mobiles de diffusion multimédia (MBMS) point à multipoint à un débit de données choisi et un facteur de diffusion fixe ; et
la diffusion de messages de commande de répéteur sur une cellule entière ;
(3) la commande à distance d'un canal de commande de répéteur à l'aide d'un canal de liaison descendante de diffusion ; et
l'utilisation de la détection de la présence d'un code de brouillage secondaire transmis à partir d'une même station de base dans une cellule pour activer (interrupteur sur « ON ») et désactiver (interrupteur sur « OFF ») des répéteurs et/ou préamplificateurs déployés dans la cellule ; et
(4) la commande à distance d'un canal de commande de répéteur à l'aide d'une signalisation auxiliaire qui est injectée dans des antennes de station de base ou transmise par un chemin radiofréquence distinct et des antennes ;
ladite seule station mobile « fictive » étant un élément d'équipement utilisateur.

14. Système de communication comprenant :
un réseau cellulaire ; et
un appareil de communication selon l'une quelconque des revendications 1 à 8 couplé au réseau cellulaire.
